# EUROPEAN PATENT SPECIFICATION

(11) **EP 2 432 697 B1**
(45) Date of publication and mention of the grant of the patent: **20.05.2015**
(21) Application number: 10778005.8
(22) Date of filing: 21.04.2010
(51) Int. Cl.: B29C 65/00, B29C 65/10, B65B 9/20, B65B 51/20, B65B 51/26, B29C 53/52, B29K 101/12, B29K 711/12, B65B 51/10

(54) **DEVICE FOR A FILLING MACHINE, A FILLING MACHINE AND A METHOD FOR PREVENTING INCORRECT STICKING OF THE LONGITUDINAL EDGES OF A PACKAGING MATERIAL**
VORRICHTUNG FÜR EINE ABFÜLLMASCHINE, ABFÜLLMASCHINE UND VERFAHREN ZUR VERHINDERUNG DES UNERWÜNSCHTEN FESTSTECKENS DER LÄNGSKANTEN EINES VERPACKUNGSMATERIALS
DISPOSITIF POUR UNE MACHINE DE REMPLISSAGE, MACHINE DE REMPLISSAGE ET PROCÉDÉ POUR EMPÊCHER UN MAUVAIS COLLAGE DES BORDS LONGITUDINAUX D'UN MATÉRIAU D'EMBALLAGE

(30) Priority: 19.05.2009 SE 0900668
(43) Date of publication of application: 28.03.2012
(73) Proprietor: Tetra Laval Holdings & Finance S.A., 1009 Pully (CH)
(72) Inventor: ROSBERG, Bengt, SE-24691 Höör (SE)
(74) Representative: Tetra Pak - Patent Attorneys SE
(86) International application number: PCT/SE2010/000103
(87) International publication number: WO 2010/134864

(56) References cited:
- EP-A1- 0 819 607
- EP-A1- 1 116 659
- EP-A1- 1 468 914
- WO-A1-2006/073339
- JP-A- 2003 191 356

## Description

### Field of the Invention

The present invention relates to a device for a packaging machine forming a tube of material from a web of material, and particularly to an improved mechanism for the longitudinal sealing of said tube.

### Technical Background

Packaging containers used for containment of a product, such as a liquid or semi liquid foodstuff is commonly used today, said containers being formed from a packaging laminate comprising a core of paper or paperboard and a liquid-tight thermoplastic material laminated to at least one side of the paper core. The packaging laminate may optionally comprise additional barrier layers with the purpose of preventing leakage or intrusion of liquid and/or gases.

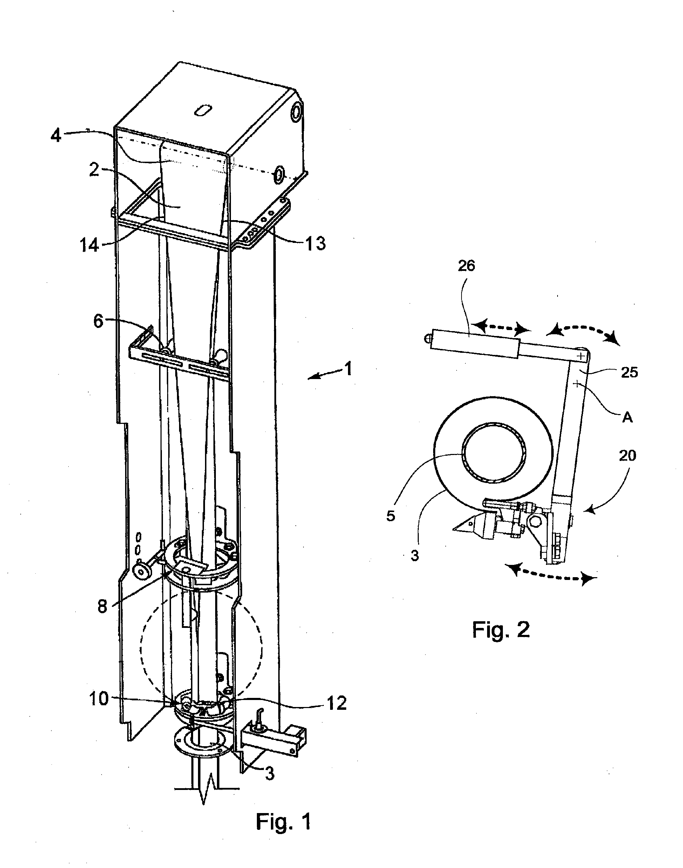

In the production of such packaging containers a web of packaging laminate is formed into a tube, before the subsequent sealing of the longitudinally overlapping edges of the web. This is performed at the station that is encircled with the dashed line in Fig. 1. The longitudinally sealed tube is continuously filled with product, and then transversally sealed, cut into individual packaging containers having a cushion shape, which are subsequently formed into a generally parallelepipedic shape.

During short stops of the machine, the longitudinal edges of the packaging material tube can sometimes adhere to each other in the incorrect position, and this can result in the tube bursting during re-start of production. This of course necessitates thorough cleaning and additional down-time of the machine, which is highly undesirable.

EP 0 819 607 discloses a web heating device for use in forming a web into a tubular shape and heat-sealing an inner surface of an outer edge of the web and an outer surface of an inner edge of the web to provide a lap. Hot air is used for heating the hot air is supplied by a nozzle having hot air outlet openings. The device also comprises transport means for transporting the web along a predetermined path, and a baffle plate so disposed as to be opposed to the hot air outlet openings with the outer edge of the web positioned there between. The web heating device can be moved between an operative position during production and an inactive position during a short stop.

### Summary of the Invention

In order to mitigate the problems of prior art filling machines, the device of the present invention comprises a mechanism which is automatically activated during a short stop, to keep the edges of the longitudinal edges of the packaging material tube separated, such that incorrect adherence is avoided. This is achieved by using a device as is disclosed in claim 1, comprising a movable finger roller which is automatically moved from an inactive position to an operative position during a short stop in production, in response to the movement of the longitudinal sealing mechanism, for separating the longitudinal edges of the packaging material tube such that they do not stick incorrectly to each other. A method of operating the movable finger roller according to the invention is disclosed in claim 5, and a filling machine having a movable finger roller is disclosed in claim 8.

### Brief description of the Drawings

Fig. 1 is a perspective view of a tube-forming section of a packaging machine according to the prior art, without a longitudinal sealing mechanism for clarity,
Fig. 2 is a sectional view from above of the longitudinal sealing mechanism, showing the still open tube and a fix roller,
Fig. 3 is a perspective view of the longitudinal sealing mechanism according to the invention, with the movable finger roller in a first inactive position,
Fig. 4 is a perspective view of the longitudinal sealing mechanism according to the invention, with the movable finger roller in a second operative position,
Fig. 5 is a perspective view of the movable finger roller of the longitudinal sealing mechanism of Figs. 3 and 4, and
Fig. 6 is a partly sectional view from above showing a pressure roller acting from an inside of the vertical tube on the longitudinal sealing, further downstream from the longitudinal sealing mechanism.

### Detailed Description

Fig. 1 illustrates a tube-forming section in a packaging machine 1. In the forming section of the packaging machine, a web 2 of packaging material is shaped into a tube 3. The web 2 is passed over a bending roller 4 which basically deflects the path of the web 2, and is directed via guide means 6, 8 to a lower forming tool 10, which has an opening trough which the web is led. Forming rollers 12 may define the circumference of the opening. The number of guide means 6, 8 between the bending roller 4 and the lower forming tool 10 may vary, generally between one and three.

Just upstream of the lower forming tool 10, the tube of packaging laminate is longitudinally sealed, by heating and joining the lateral edges 13 and 14, respectively, of the web, and then transversally sealed and cut, to form individual packaging containers. These individual packaging containers may or may not be processed further (folded). The invention is thus not limited to use in connection with cushion shaped packages but could be used in manufacturing other types of packages, such as tetrahedron shaped and rectangular parallelepiped shaped packages, and generally all packaging containers being formed from a tube of packaging laminate, which is transversally sealed and cut.

Fig. 2 illustrates how the tube is guided by a fix finger roller 23, at the upstream end of the longitudinal sealing mechanism, before being longitudinally sealed. The fix finger roller 23 keeps the longitudinal edges of the tube separated such that a heating element 24 can be placed in the correct position for heating both longitudinal edges. The heating element 24 in the shown embodiment is using hot air for the heating, but various alternatives are available.

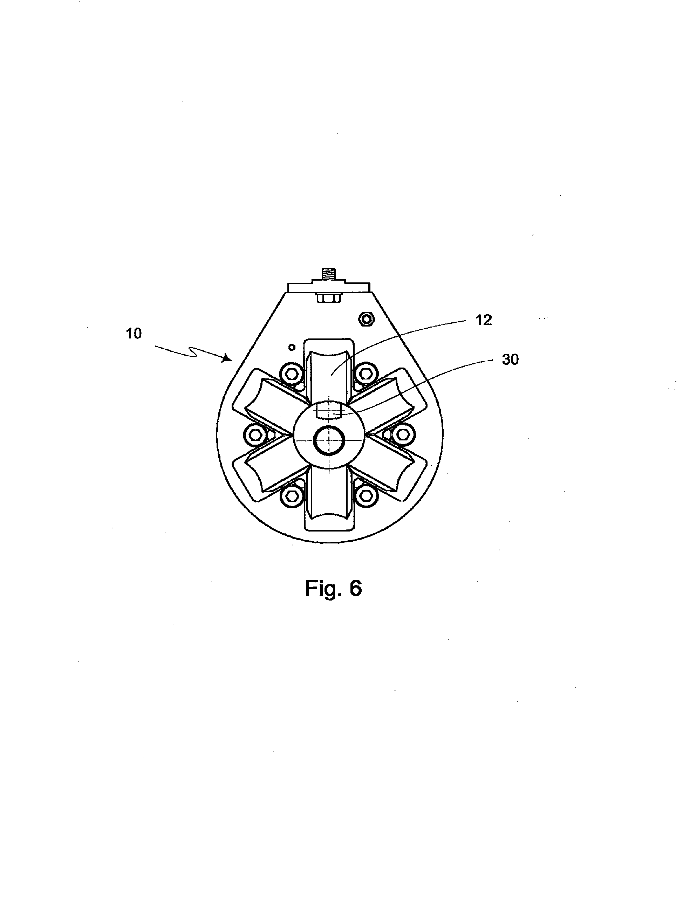

The heated edges are pressed together downstream of the heating element 24 between an inner roller 30, see Fig. 6, arranged on the filling pipe 5, and a forming roller 12 being a part of the lower forming tool 10.

The longitudinal sealing mechanism 20 comprises a frame 21 being pivotally connected to a pivot 22 around axis A. The pivot 22 is in turn rigidly attached to the filling machine frame, not shown.

The fix finger roller 23 is attached to the upper, upstream part of the frame 21, for guiding an inner edge of the packaging material tube, as can be seen in Fig. 2. It also serves to separate the two edges such that they do not stick to each other in an incorrect state. The heating element 24 is also attached to the frame 21, for heating the surfaces of the two lateral edges of the packaging material, said surfaces facing each other for subsequent sealing further downstream. The frame 21 is also provided with an arm 25 or similar, that extends on the other side of the pivot 22. An actuator 26 is at one end connected to the arm 25 and at another end hingedly connected to the filling machine. The actuator 26 is capable of reciprocating movement, in order to either pull or push the arm 25 according to the arrows in Fig. 2. This leads to a pivotal movement of the frame 21, and the frame 21, fix finger roller 23 and heating element 24 all move together as a unit, as a result of the action of the actuator 26. The frame 21 is further provided with a cam 27, for controlling the motion of a movable finger roller 40.

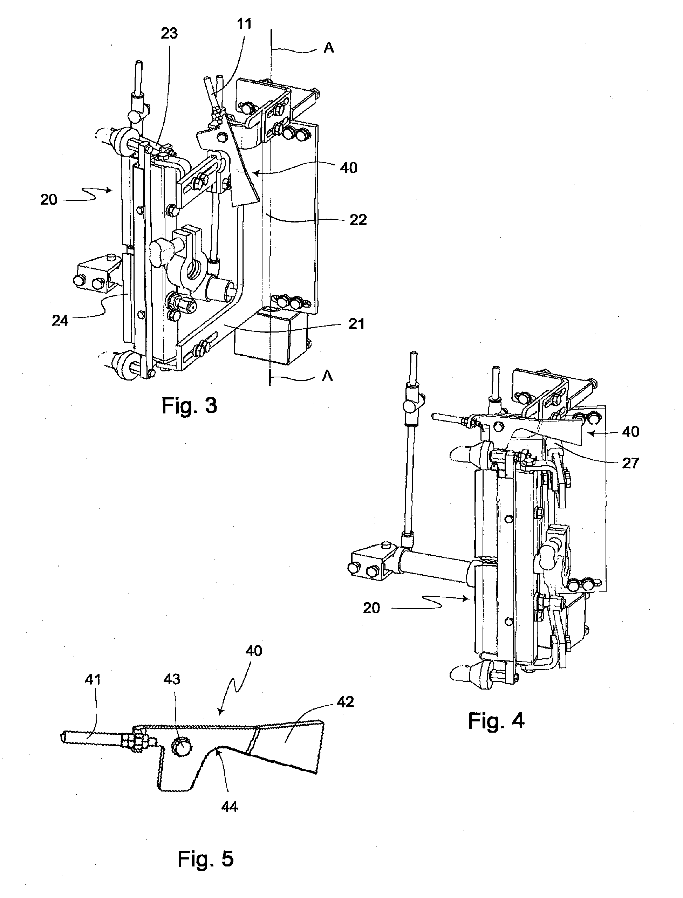

The movable finger roller 40 is shown in detail in Fig. 5, and it comprises a finger 41, a body 42 to which the finger 41 is attached, and the body 42 is attached to the filling machine by a pivot 43. The body is further provided with a curved cam surface 44, along which the movement of the finger roller 40 is controlled.

During operation of the filling machine, the actuator 26 is extended such that the longitudinal sealing mechanism 20 is at the operative position as shown in Figs. 2 and 3. The movable finger roller 40 is now in an inactive position. When the filling machine is stopped, it is important to withdraw the longitudinal sealing mechanism 20, such that the packaging material surfaces are not overheated. This is especially important if the sealing is done with hot air, which is normally not turned off during a short stop. The actuator 26 is retracted such that the longitudinal sealing mechanism 20 is moved outwards and is removed from the edges of the packaging material tube 3, to the position shown in Fig. 4. During this movement, the cam 27 is in contact with the cam surface 44 and the finger roller 40 is gradually tilted from an inactive to an operative position, as shown in Fig. 4. The movable finger roller 40 is now in position to prevent the opposing surfaces of the lateral edges of the packaging material tube 3 from sticking to each other in an incorrect way. In the operative position, the movable finger roller 40 is located substantially at the same place as the fix finger roller 23 occupies during production.

When the filling machine is to be started, the steps are reversed such that the longitudinal sealing mechanism 20 is replaced at its original, production position at the tube 3, and the cam 27 inactivates the movable finger roller 40 through interactions with the cam surface 44. The movable finger roller 40 can also be spring biased, in order to ensure inactivation thereof, and a return movement to the inactive position as shown in Fig. 3.

## Claims

1. Device for a filling machine (1), comprising
a longitudinal sealing mechanism (20) which is movable between an operative position during production and an inactive position during a short stop,
**characterized by** further comprising a movable finger roller (40) which is automatically moved from an inactive position to an operative position during a short stop in production, in response to the movement of the longitudinal sealing mechanism, for separating the longitudinal edges of the packaging material tube such that they do not stick incorrectly to each other.

2. Device according to claim 1, wherein the longitudinal sealing mechanism (20) comprises a cam (27) that interacts with a cam surface (44) of the movable finger roller (40) for automatically moving the movable finger roller (40) between an operative position and an inactive position.

3. Device according to claim 1, wherein an actuator (26) is pivotally connected between the longitudinal sealing mechanism (20) and the filling machine frame, for moving said longitudinal sealing mechanism (20) between an operative and an inactive position.

4. Device according to claim 3, wherein the longitudinal sealing mechanism (20) is provided with an arm (25) extending out from a pivot (22) around which the longitudinal sealing mechanism (20) is movable, the actuator (26) being pivotally connected to said arm (25).

5. Method in a filling machine (1) for preventing incorrect sticking of the longitudinal edges of a packaging material tube during a short stop, comprising the steps of
moving a movable longitudinal sealing mechanism (20), from an operative position to an inactive position,
automatically, in response to the movement of the longitudinal sealing mechanism (20), moving a movable finger roller (40) from an inactive position to an active position, where it serves to separate the longitudinal edges of the packaging material tube such that they do not stick incorrectly to each other.

6. Method according to claim 5, wherein the longitudinal sealing mechanism (20) via a cam (27) automatically and mechanically moves the movable finger roller (40) through interaction with a cam surface (44) on said movable finger roller (40).

7. Method according to claim 5, wherein the steps are reversed when the filling machine is resuming production, such that the movable finger roller (40) no longer serves to separate the longitudinal edges of the packaging material tube.

8. Filling machine comprising a device according to claim 1.

## Patentansprüche

1. Vorrichtung für eine Füllmaschine (1), die Folgendes umfasst:
einen Längsverschlussmechanismus (20), der zwischen einer Betriebsposition während einer Produktion und einer inaktiven Position während einer kurzen Pause beweglich ist,
**dadurch gekennzeichnet, dass** sie ferner eine bewegliche Fingerwalze (40) umfasst, die automatisch als Reaktion auf die Bewegung des Längsverschlussmechanismus zum Trennen der Längskanten der Verpackungsmaterialröhre, so dass sie nicht verkehrt aneinander haften, während einer kurzen Pause der Produktion von einer inaktiven Position in eine Betriebsposition bewegt wird.

2. Vorrichtung nach Anspruch 1, wobei der Längsverschlussmechanismus (20) einen Nocken (27) umfasst, der mit einer Nockenfläche (44) der beweglichen Fingerwalze (40) wechselwirkt, um die bewegliche Fingerwalze (40) automatisch zwischen einer Betriebsposition und einer inaktiven Position zu bewegen.

3. Vorrichtung nach Anspruch 1, wobei ein Betätigungselement (26) schwenkbar zwischen dem Längsverschlussmechanismus (20) und dem Füllmaschinenrahmen verbunden ist, um den Längsverschlussmechanismus (20) zwischen einer Betriebsposition und einer inaktiven Position zu bewegen.

4. Vorrichtung nach Anspruch 3, wobei der Längsverschlussmechanismus (20) mit einem Arm (25) versehen ist, der sich von einem Gelenk (22), um das der Längsverschlussmechanismus (20) beweglich ist, erstreckt, wobei das Betätigungselement (26) schwenkbar mit dem Arm (25) verbunden ist.

5. Verfahren in einer Füllmaschine (1) zum Verhindern eines verkehrten Haftens der Längskanten einer Verpackungsmaterialröhre während einer kurzen Pause, das die folgenden Schritte umfasst:
Bewegen eines beweglichen Längsverschlussmechanismus (20) von einer Betriebsposition in eine inaktive Position,
als Reaktion auf die Bewegung des Längsverschlussmechanismus (20) automatisches Bewegen einer beweglicher Fingerwalze (40) von einer inaktiven Position in eine aktive Position, in der sie dazu dient, die Längskanten der Verpackungsmaterialröhre zu trennen, so dass sie nicht verkehrt aneinander haften.

6. Verfahren nach Anspruch 5, wobei der Längsverschlussmechanismus (20) die bewegliche Fingerwalze (40) automatisch und mechanisch durch Wechselwirken mit einer Nockenfläche (44) auf der beweglichen Fingerwalze (40) über einen Nocken (27) bewegt.

7. Verfahren nach Anspruch 5, wobei die Schritte umgekehrt werden, wenn die Füllmaschine die Produktion wieder aufnimmt, so dass die bewegliche Fingerwalze (40) nicht länger dazu dient, die Längskanten der Verpackungsmaterialröhre zu trennen.

8. Füllmaschine, die eine Vorrichtung nach Anspruch 1 umfasst.

## Revendications

1. Dispositif pour une machine de remplissage (1), comprenant un mécanisme de scellage longitudinal (20) qui peut être déplacé entre une position fonctionnelle pendant la production et une position inactive pendant un court arrêt, **caractérisé en ce qu'**il comprend en outre un rouleau à doigts mobiles (40) qui est déplacé automatiquement d'une position inactive dans une position fonctionnelle pendant un court arrêt de la production, en réponse au mouvement du mécanisme de scellage longitudinal, pour séparer les bords longitudinaux du tube de matériau d'emballage de telle sorte qu'ils ne collent pas de manière incorrecte l'un à l'autre.

2. Dispositif selon la revendication 1, dans lequel le mécanisme de scellage longitudinal (20) comprend une came (27) qui coopère avec une surface de came (44) du rouleau à doigts mobiles (40) pour déplacer automatiquement le rouleau à doigts mobiles (40) entre une position fonctionnelle et une position inactive.

3. Dispositif selon la revendication 1, dans lequel un actionneur (26) est connecté de manière pivotante entre le mécanisme de scellage longitudinal (20) et le cadre de la machine de remplissage, pour déplacer ledit mécanisme de scellage longitudinal (20) entre une position fonctionnelle et une position inactive.

4. Dispositif selon la revendication 3, dans lequel le mécanisme de scellage longitudinal (20) est pourvu d'un bras (25) s'étendant vers l'extérieur depuis un pivot (22) autour duquel le mécanisme de scellage longitudinal (20) peut être déplacé, l'actionneur (26) étant connecté de manière pivotante audit bras (25).

5. Procédé dans une machine de remplissage (1) pour empêcher un collage incorrect des bords longitudinaux d'un tube de matériau d'emballage pendant un court arrêt, comprenant les étapes suivantes :
déplacement d'un mécanisme de scellage longitudinal mobile (20) d'une position fonctionnelle dans une position inactive, automatiquement, en réponse au mouvement du mécanisme de scellage longitudinal (20), déplacement d'un rouleau à doigts mobiles (40) d'une position inactive dans une position active, dans laquelle il sert à séparer les bords longitudinaux du tube de matériau d'emballage de telle sorte qu'ils ne collent pas de manière incorrecte l'un à l'autre.

6. Procédé selon la revendication 5, dans lequel le mécanisme de scellage longitudinal (20), par le biais d'une came (27), déplace automatiquement et mécaniquement le rouleau à doigts mobiles (40) par interaction avec une surface de came (44) sur ledit rouleau à doigts mobiles (40).

7. Procédé selon la revendication 5, dans lequel les étapes sont inversées lorsque la machine de remplissage reprend la production, de telle sorte que le rouleau à doigts mobiles (40) ne serve plus à séparer les bords longitudinaux du tube de matériau d'emballage.

8. Machine de remplissage comprenant un dispositif selon la revendication 1.
